# DEMANDE DE BREVET EUROPEEN

(11) **EP 1 384 628 A2**
(43) Date de publication de la demande: **28.01.2004**
(21) Numéro de dépôt: 03291761.9
(22) Date de dépôt: 16.07.2003
(51) Int. Cl.: B60R 16/02, B60R 13/08

(54) **Panneau insonorisant comprenant des agrafes integrees**

(30) Priorité: 26.07.2002 FR 0209539
(71) Demandeur: Centre d'Etude et de Recherche pour l'Automobile ( CERA), 51100 Reims (FR)
(72) Inventeur: Sares, Laurent, 51100 Reims (FR)
(74) Mandataire: Geismar, Thierry

(57) **Abrégé**

L'invention concerne un panneau insonorisant (1) du type comprenant une couche de matériau thermoplastique souple (2) et, associée à elle, une couche de mousse (3), ladite couche de matériau thermoplastique (2) intégrant des agrafes (4) qui comprennent un logement (5) agencé pour recevoir un élément (6) destiné à être attaché audit panneau (1), les parois externes (7) dudit logement (5) étant au moins partiellement enrobées dans la mousse (3), dans lequel les agrafes (4) sont formées d'au moins un bourrelet (9) saillant par rapport au plan de la couche de matériau thermoplastique (2) de sorte à délimiter le logement (5), ledit bourrelet (9) étant rempli de mousse (3)

L'invention concerne également un procédé de réalisation d'un tel panneau.

## Description

L'invention concerne un panneau insonorisant et un procédé de réalisation d'un tel panneau.

De tels panneaux sont notamment destinés aux véhicules automobiles, où ils sont utilisés pour isoler l'habitacle de l'environnement extérieur. En particulier, ils peuvent être fixés sur le tablier du véhicule automobile, pour atténuer le bruit occasionné par le moteur et le roulement.

Ces panneaux sont actuellement réalisés sous la forme d'une plaque massive en matière plastique de densité élevée, appelée masse lourde, associée à un support faisant office de ressort, tel qu'une couche de mousse. La masse lourde peut être une couche de matériau élastomère thermoplastique comprenant une charge minérale, notamment obtenue par moulage.

L'ensemble constitué par la masse lourde et le ressort favorise, de par sa structure, l'amortissement des vibrations et présente par conséquent des propriétés d'isolation acoustique intéressantes.

Du fait de leur localisation, de tels panneaux sont le lieu privilégié de fixation de nombreux éléments présents à l'intérieur de l'habitacle, tels que des câbles qui ont à longer lesdits panneaux.

Pour le maintien de ces éléments, il est connu de prévoir des pièces de fixation en plastique injecté, traversant des orifices ménagés dans le panneau, qui sont clipsées dans la tôle du tablier.

Cette solution présente l'inconvénient de nécessiter l'emploi de pièces séparées, ce qui contraint à prévoir des étapes spécifiques de fabrication et de fixation de ces pièces.

En outre, la formation d'orifices, même lorsqu'ils sont partiellement obturés par la pièce, diminue la performance globale d'isolation acoustique du panneau.

Pour remédier à cet inconvénient, on connaît, notamment du document FR-2 764 229, des agrafes destinées au maintien de câbles qui sont moulées d'une seule pièce avec la masse lourde. Ces agrafes sont formées de deux saillies s'étendant à partir d'une zone de la masse lourde.

On connaît également du document US-6 092 854 des moyens de maintien qui sont partiellement enrobés dans le mousse, lesdits moyens comprenant des doigts saillants.

Toutefois, les solutions de l'art antérieur ne permettent pas un maintien optimal des câbles, en ce que seule la rigidité des saillies, qui est limitée, assure ce maintien.

Pour pallier cet inconvénient, l'invention propose un panneau insonorisant dans lequel les propriétés non seulement de la masse lourde, mais également de la couche faisant office de ressort, sont utilisées pour permettre l'introduction et la fixation d'éléments de manière optimale.

Ce panneau présente l'avantage de comprendre des agrafes intégrées dans la masse lourde, ce qui simplifie la mise en place des éléments tels que les câbles en supprimant l'opération de montage d'agrafes séparées, et n'altère pas sa capacité d'isolation acoustique.

A cet effet, et selon un premier aspect, l'invention propose un panneau insonorisant du type comprenant une couche de matériau thermoplastique souple et, associée à elle, une couche de mousse, ladite couche de matériau thermoplastique intégrant des agrafes qui comprennent un logement agencé pour recevoir un élément destiné à être attaché audit panneau, dans lequel les parois externes dudit logement sont au moins partiellement enrobées dans la mousse, les agrafes étant formées d'au moins un bourrelet saillant par rapport au plan de la couche de matériau thermoplastique de sorte à délimiter le logement, ledit bourrelet étant rempli de mousse.

Selon un deuxième aspect, l'invention propose un procédé de réalisation d'un tel panneau insonorisant, prévoyant les étapes successives suivantes :
- mouler dans un premier moule un matériau thermoplastique de sorte à obtenir une couche dudit matériau thermoplastique comprenant des agrafes moulées d'une seule pièce avec ladite couche de matériau thermoplastique ;
- disposer ladite couche de matériau thermoplastique dans un deuxième moule permettant le moulage par injection et réaction (RIM) ;
- injecter un mélange précurseur de mousse dans ledit moule, de telle sorte que la mousse, en s'expansant, vienne enrober les parois externes du logement ;
- démouler le panneau après expansion de la mousse.

D'autres objets et avantages de l'invention apparaîtront au cours de la description qui suit, faite en référence aux dessins annexés dans lesquels :
- la figure 1 est une vue en coupe verticale partielle d'un panneau insonorisant montrant une agrafe selon un mode de réalisation, dans laquelle un câble est fixé ;
- la figure 2 est une vue schématique de dessus de l'agrafe de la figure 1.

Le panneau insonorisant 1 selon l'invention comprend une couche de matériau thermoplastique souple 2 formant la masse lourde, associée à une couche de mousse 3 faisant office de ressort, par exemple de type polyuréthanne.

Selon une réalisation, la couche de matériau thermoplastique 2 est élastique, et peut être chargée avec une charge minérale.

Dans un exemple particulier, cette couche de matériau thermoplastique 2 est formée d'EPDM (éthylène propylène diène monomère), et comprend une charge minérale telle que du sulfate de baryum, du carbonate de calcium et/ou de l'hydroxyde de baryum.

Les proportions respectives de ces composants peuvent être les suivantes :
- entre environ 10 et 50% en poids d'EPDM ;
- entre environ 90 et 50% en poids de charge minérale.

Ce type de matériau est particulièrement performant dans le cadre d'une utilisation comme isolant acoustique dans les ensembles masse-ressort.

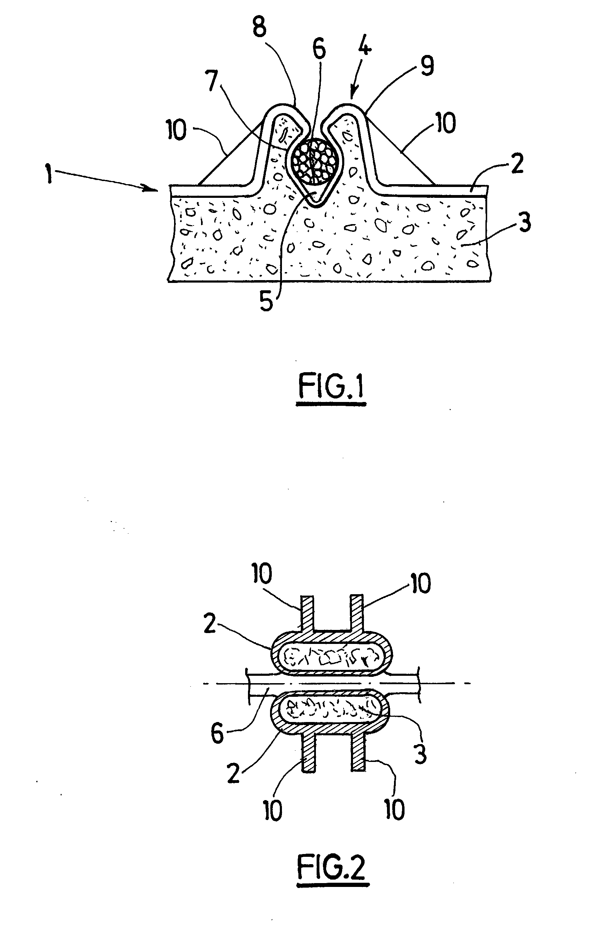

La couche de matériau thermoplastique souple 2 intègre des agrafes 4, représentées sur les figures 1 et 2 selon un mode de réalisation, qui comprennent un logement 5 agencé pour recevoir un élément 6 destiné à être attaché au panneau insonorisant 1. Dans le mode de réalisation décrit ci-dessous, cet élément 6 est formé d'un câble.

Ces agrafes 4 présentent l'avantage d'être moulées d'une seule pièce avec la couche de matériau thermoplastique souple 2, de sorte à être directement intégrées au panneau 1.

Le nombre d'agrafes 4 prévues sur le panneau insonorisant 1 est fonction du nombre et de la longueur des câbles 6 destinés à être attachés audit panneau 1.

Pour permettre l'introduction et la fixation d'un câble 6, les parois externes 7 du logement 5 sont au moins partiellement enrobées dans la mousse 3. Par « externes », on entend les parois qui ne sont pas destinées à être en contact avec le câble 6.

Le logement 5, avant l'introduction du câble 6, est de largeur interne inférieure au diamètre du câble 6.

L'introduction du câble 6 dans ledit logement 5 est facilitée par la souplesse de la couche de matériau thermoplastique 2. Cette souplesse est améliorée du fait que les parois 7 du logement 5 sont plus minces que le restant de la couche 2.

En outre, selon le mode de réalisation représenté, le logement 5 comprend une ouverture 8 de forme évasée agencée pour faciliter l'introduction du câble 6.

Par ailleurs, une fixation fiable du câble 6 est obtenue par la combinaison des propriétés de la mousse 3 et de celles de la couche de matériau thermoplastique 2.

En effet, lors de l'introduction du câble 6 dans le logement 5, la mousse 3 prévue à l'extérieur dudit logement 5 se comprime de sorte à exercer une pression sur les parois 7, et l'élasticité desdites parois 7 formées en matériau thermoplastique 2 leur permet d'exercer un effort serrant sur le câble 6.

Ainsi, après introduction en force du câble 6 dans le logement 5, ledit câble 6 est fermement maintenu à l'intérieur dudit logement 5.

Pour ce faire, l'agrafe 4 est formée d'au moins un bourrelet 9 saillant par rapport au plan de la couche de matériau thermoplastique 2, de sorte à délimiter le logement 5, ce bourrelet 9 étant rempli de mousse 3.

Pour assurer la rigidité dudit bourrelet saillant 9, et améliorer ainsi la fiabilité de la fixation du câble 6, il est prévu sur l'agrafe 4 au moins un organe de renfort 10 disposé entre le plan de la couche de matériau thermoplastique et le sommet du bourrelet 9.

En particulier, selon la réalisation représentée, l'agrafe 4 comprend deux bourrelets 9 parallèles définissant entre eux le logement 5 qui est ouvert de part et d'autre, de sorte à permettre le passage du câble 6 longitudinalement, ledit câble 6 dépassant de part et d'autre dudit logement 5.

Dans ce mode de réalisation, chaque bourrelet 9 est renforcé par deux languettes en matériau thermoplastique 10 formant étai.

On décrit à présent le procédé de réalisation d'un tel panneau 1.

On moule tout d'abord dans un premier moule un matériau thermoplastique, de sorte à obtenir une couche de matériau thermoplastique 2 comprenant des agrafes 4 moulées d'une seule pièce avec ladite couche 2.

Ce moulage présente l'avantage de permettre la maîtrise de l'épaisseur de la couche 2, de sorte notamment à former des logements 5 dont les parois 7 sont d'épaisseur plus faible que le restant de la couche 2.

Puis la couche de matériau thermoplastique 2 est disposée dans un deuxième moule permettant le moulage par injection et réaction (RIM), qui consiste principalement en l'injection du mélange précurseur de mousse à l'intérieur du moule, puis en la formation et l'expansion de la mousse 3 par réaction entre les différents constituants du mélange.

On réalise ainsi un surmoulage de la couche 2 par la mousse 3.

En outre, la couche de matériau thermoplastique 2 est disposée dans le moule de sorte à permettre, lors de l'expansion de la mousse 3, l'enrobage des parois 7.

Puis le panneau insonorisant 1 est démoulé après expansion de la mousse 3.

En variante, on peut prévoir que la couche de matériau thermoplastique 2 intégrant les agrafes 4 et la couche de mousse 3 soient formées de façon indépendante, et qu'elles soient ensuite associées l'une à l'autre par tout moyen connu.

## Revendications

1. Panneau insonorisant (1) du type comprenant une couche de matériau thermoplastique souple (2) et, associée à elle, une couche de mousse (3), ladite couche de matériau thermoplastique (2) intégrant des agrafes (4) qui comprennent un logement (5) agencé pour recevoir un élément (6) destiné à être attaché audit panneau (1), les parois externes (7) dudit logement (5) étant au moins partiellement enrobées dans la mousse (3), ledit panneau étant **caractérisé en ce que** les agrafes (4) sont formées d'au moins un bourrelet (9) saillant par rapport au plan de la couche de matériau thermoplastique (2) de sorte à délimiter le logement (5), ledit bourrelet (9) étant rempli de mousse (3).

2. Panneau selon la revendication 1, **caractérisé en ce que** le logement (5) comprend une ouverture (8) de forme évasée agencée pour faciliter l'introduction dudit élément (6) dans ledit logement (5).

3. Panneau selon la revendication 1 ou 2, **caractérisé en ce que** l'agrafe (4) comprend deux bourrelets (9) parallèles définissant entre eux un logement (5) ouvert de part et d'autre.

4. Panneau selon l'une quelconque des revendications 1 à 3, **caractérisé en ce que** l'agrafe (4) comprend en outre au moins un organe de renfort (10).

5. Panneau selon l'une quelconque des revendications 1 à 4, **caractérisé en ce que** la couche de matériau thermoplastique (2) est élastique.

6. Panneau selon la revendication 5, **caractérisé en ce que** la couche de matériau thermoplastique (2) est chargée, et comprend :
- entre environ 10 et 50% en poids d'EPDM ;
- entre environ 90 et 50% en poids de charge minérale.

7. Panneau selon l'une quelconque des revendications 1 à 6, **caractérisé en ce que** la couche de mousse (3) est de type polyuréthanne.

8. Procédé de réalisation d'un panneau (1) selon l'une quelconque des revendications 1 à 7, **caractérisé en ce qu'**il prévoit les étapes successives suivantes :
- mouler dans un premier moule un matériau thermoplastique de sorte à obtenir une couche dudit matériau thermoplastique (2) comprenant des agrafes (4) moulées d'une seule pièce avec ladite couche de matériau thermoplastique (2) ;
- disposer ladite couche de matériau thermoplastique (2) dans un deuxième moule permettant le moulage par injection et réaction (RlM) ;
- injecter un mélange précurseur de mousse dans ledit moule, de telle sorte que la mousse (3), en s'expansant, vienne enrober les parois externes (7) du logement (5) ;
- démouler le panneau (1 ) après expansion de la mousse (3).
